# EUROPEAN PATENT SPECIFICATION

(11) **EP 3 151 565 B1**
(45) Date of publication and mention of the grant of the patent: **01.10.2025**
(21) Application number: 16192071.5
(22) Date of filing: 03.10.2016
(51) Int. Cl.: H04N 19/63, H04N 19/44, H04N 19/86, G06T 5/73, G06T 7/00

(54) **A LOW COMPLEXITY PERCEPTUAL VISUAL QUALITY EVALUATION METHOD FOR JPEG2000 COMPRESSED STREAMS**
VERFAHREN ZUR AUSWERTUNG DER PERZEPTUELLEN VISUELLEN QUALITÄT MIT NIEDRIGER KOMPLEXITÄT FÜR KOMPRIMIERTE JPEG2000-STRÖME
PROCÉDÉ D'ÉVALUATION DE FAIBLE COMPLEXITÉ DE QUALITÉ VISUELLE DE PERCEPTION DE FLUX DE FICHIERS JPEG2000 COMPRESSÉS

(30) Priority: 03.10.2015 IN 3766MUN2015; 14.09.2016 US 201615264820
(43) Date of publication of application: 05.04.2017
(73) Proprietor: Project Giants, LLC, Nevada City, CA 95959 (US)
(72) Inventor: SESHADRI RAMASWAMY, Krishna, 560040 Bangalore (IN)
(74) Representative: HGF

(56) References cited:
- RABBANI M ET AL: "An overview of the JPEG 2000 still image compression standard", SIGNAL PROCESSING. IMAGE COMMUNICATION, ELSEVIER SCIENCE PUBLISHERS, AMSTERDAM, NL, vol. 17, no. 1, 1 January 2002 (2002-01-01), pages 3 - 48, XP004326797, ISSN: 0923-5965, DOI: 10.1016/S0923-5965(01)00024-8
- HANGHANG TONG ET AL: "Blur detection for digital images using wavelet transform", 2004 IEEE INTERNATIONAL CONFERENCE ON MULTIMEDIA AND EXPO : JUNE 27 - 30, 2004, TAIPEI, TAIWAN, IEEE OPERATIONS CENTER, PISCATAWAY, NJ, vol. 1, 27 June 2004 (2004-06-27), pages 17 - 20, XP010770733, ISBN: 978-0-7803-8603-7, DOI: 10.1109/ICME.2004.1394114
- DEEPTI KOUJALAGI ET AL: "BLUR DETECTION OF DIGITAL IMAGES IN REAL-TIME 1", 1 September 2015 (2015-09-01), pages 2393 - 8374, XP055345285, Retrieved from the Internet <URL:http://troindia.in/journal/ijcesr/vol2iss9/53-60.pdf> [retrieved on 20170214]
- HARISH NARAYANAN RAMAKRISHNAN: "Scholars' Mine Detection and estimation of image blur", 1 December 2010 (2010-12-01), pages 1 - 72, XP055345283, Retrieved from the Internet <URL:http://scholarsmine.mst.edu/cgi/viewcontent.cgi?article=5803&context=masters_theses> [retrieved on 20170214]
- MARZILIANO P ET AL: "Perceptual blur and ringing metrics: application to JPEG2000", SIGNAL PROCESSING. IMAGE COMMUNICATION, ELSEVIER SCIENCE PUBLISHERS, AMSTERDAM, NL, vol. 19, no. 2, 1 February 2004 (2004-02-01), pages 163 - 172, XP004483133, ISSN: 0923-5965, DOI: 10.1016/J.IMAGE.2003.08.003

## Description

### TECHNICAL FIELD

This disclosure relates to decoding JPEG2000 images, and more particularly to evaluation of image quality resulting from the decoding.

### BACKGROUND

The Joint Photographic Experts Committee (JPEG) has created different standards for compression of still images. The initial JPEG standard used discrete cosine transform compression. A newer version of JPEG, JPEG2000 also referred to as JPEG2K, relies upon a wavelet-based method. JPEG2K encoders encode the digital image data in accordance with this standard, compressing the file size for storage and/or transmission, and JPEG2K decoder can decode them prior to display or printing.

The JPEG2K codes streams may contain regions of interest that offer several mechanisms to support spatial random access or access at varying degrees of granularity, or resolution. This allows the decoder to adjust the level of resolution depending upon the quality of the image. The main visual artifact that reduces image quality in JPEG2K image is blur, which results from a loss of detail, mostly at the edges of objects in the image. Excessive low pass filtering typically causes the blur.

Image quality measures may take many forms, including Perceptual Visual Quality or PVQ. To maintain visual quality, it becomes important to quantify the numbers of artifacts introduced by the compression process.

Reference is made to RABBANI M ET AL, "An overview of the JPEG 2000 still image compression standard", SIGNAL PROCESSING, IMAGE COMMUNICATION, ELSEVIER SCIENCE PUBLISHERS, AMSTERDAM, NL, vol. 17, no. 1, 2002, pages 3-48.

### SUMMARY

An embodiment consists of a method of detecting image quality in a wavelet transform-encoded image according to claim 1.

Another embodiment consists of a decoding system having a memory to receive wavelet-transformed compressed image data being partitioned into tiles, each tile partitioned into four subbands, and a decoder according to claim 9.

### BRIEF DESCRIPTION OF THE DRAWINGS

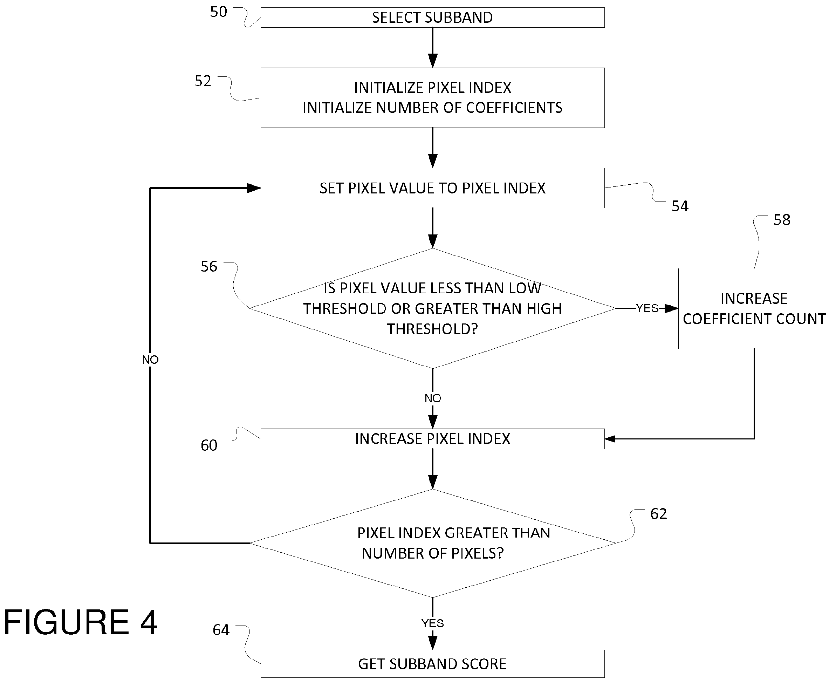

Basis for the claimed invention may be found in Figure 4 and the associated description. The other figures show features useful for understanding the claimed invention.
Figure 1 shows an embodiment of an image decompression system.
Figure 2 shows an example of an image tile broken down into subbands.
Figure 3 shows a flowchart of an embodiment of a method to evaluate a number of coefficients in a reduced number of subbands.
Figure 4 shows a flowchart of an embodiment of a method to determine a number of coefficients in a subband.
Figure 5 shows the Sub-band labeling after one level of wavelet transform according to one embodiment of the present invention.
Figure 6 shows the flowchart of PVQ evaluation process according to one embodiment of the present invention.
Figure 7 shows the flowchart of getSubBandScore () process according to one embodiment of the present invention.

### DETAILED DESCRIPTION OF THE EMBODIMENTS

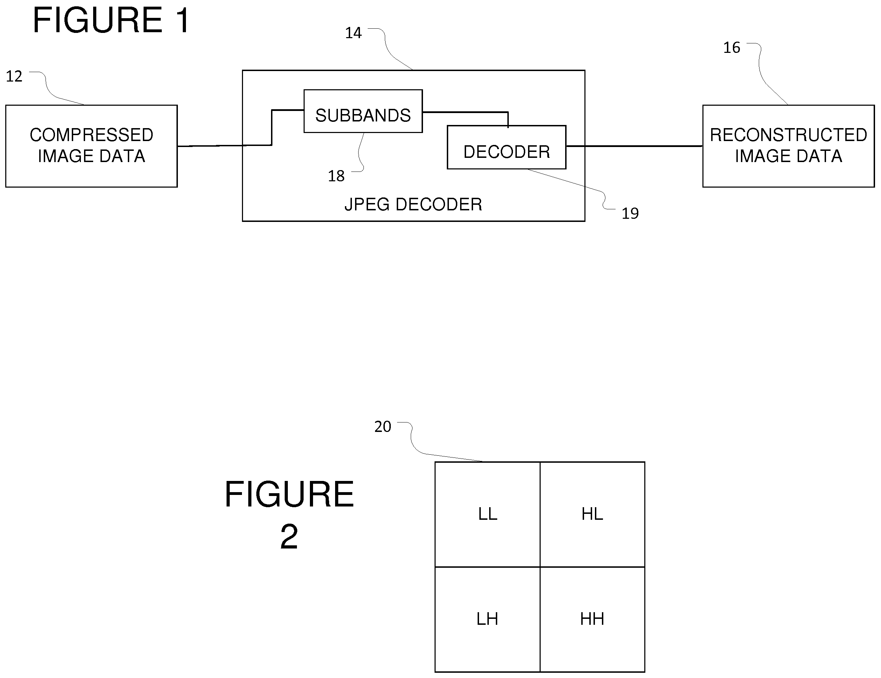

Figure 1 shows an embodiment of an image decompression system 10. Typically, the system is part of a larger image system that includes an encoder for encoding images to be transmitted from the system as well as received. The decoder may be implemented in a general purpose processor, but may also be a special purpose integrated circuit (chip). The decoder receives decoded image data 12 at a JPEG2000 (JPEG2K) decoder.

A JPEG2K encoder, on the transmission end, compresses the original data using a wavelet transform. The encoder partitions the image into "tiles," such as 20 in Figure 2, which are analogous to the 8 pixel by 8 pixel blocks in the previous JPEG standard. The JPEG2K tiles are rectangular and all the same size. They each undergo encoding independently and represent different regions of original input image. The encoding results in four subbands for each tile.

The subbands shown in Figure 2 represent different types of filtering. LL denotes low pass filtering in both the horizontal and vertical directions. HL denotes high pass filtering in the horizontal direction and low pass filtering in the vertical direction. Similarly, LH denotes low pass filtering in the horizontal direction and high pass filtering in the vertical region, and HH denotes high pass filtering in both directions.

The embodiments here use the subbands received in the compressed image data, typically stored in a memory 18 of the decoder 14, and the decoding element 19 analyzes them to determine a number of coefficients in each of some subset of the subbands. The subbands used here are all but the LL subband. A higher number of coefficients in a subband indicates a non-blurred image, resulting in a higher PVQ score. A blurred image reflects as a sparse percentage of coefficients in the subbands, indicating a lower PVQ score. By analyzing only 3 of the subbands, one can determine whether the image data is of high or low blue, without having to process all of the data. An image with low blur will have a high number of coefficients in the subbands, and an image with high blur will have a low number of coefficients.

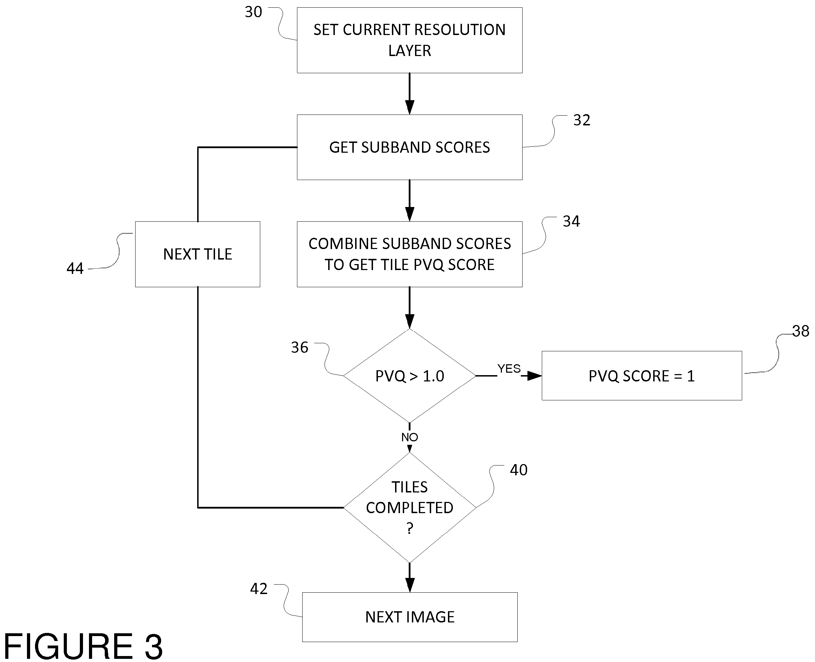

Figure 3 shows a flowchart of an embodiment of a method to determine blurriness in an image. Generally, the method is applied to the *n-1* resolution layer. Most JPEG2K encoding occurs at multiple layers of resolution. In the discussion here, N denotes the resolution of the final decoded image, and the embodiments are performed on the resolution layer one layer, *n-1,* below the final resolution layer. Information would be progressively lost due to the two-dimensional low pass filtering. As the resolution decreases, what remains is mostly the low frequency component of the original image. Looking for the presence of high frequency data, such as edges, in such components may only mislead the process. Further, in the lower resolution layers, the data is mostly 'synthetic' after successive transforms, and not the information as it exists in the original image data. However, the processing could be performed on several different resolution layers.

In Figure 3, the process sets the current resolution layer at 30. The subband scores for each of the three subbands used are gathered at 32. These subband scores are combined to get the overall PVQ score for the tile. The individual subband scores may be weighted. In one embodiment, the HH subband score and the LH subband score were each multiplied by 3. This number was derived by experiments and may be changed as desired.

At 36, the combined PVQ is checked to see if it is greater than 1. If so, the PVQ score is set at 1 at 38. In the embodiments here, a PVQ score of 1 indicates an image with no blur, while a score of 0 indicates high blur. The embodiment here is applied one tile at a time. To apply the process to the whole image, the process checks to see if all the tiles are completed at 40. If yes, the process moves on to the next image. If no, the next tile is then accessed at 44 and the process moves on until the entire image is processed.

The basis of the process of Figure 3 includes determining a subband score. Figure 4 shows one embodiment of a method of determining a subband score for a particular subband 50. The process tracks two different counters, one to track the pixel upon which the process operates, the pixel index, and one to track the number of coefficients within the subband. As each subband undergoes processing, these counters are initialized at 52. The pixel value is set equal to the subband data for the pixel corresponding to the pixel index at 54.

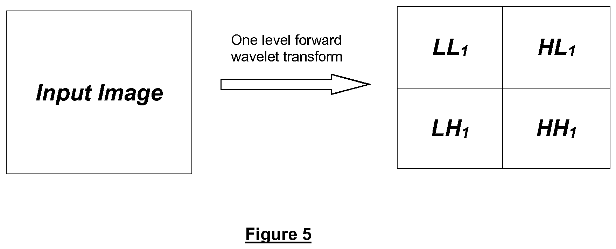

At 56, the process determines whether the pixel value is less than a low threshold or higher than a high threshold. The thresholds may be set based upon the type of image data, etc. In one embodiment the low threshold is set at 123 and the high threshold is set to 133 for 8-bit depth input data. If true, the coefficient count is increased at 58 and the pixel index is increased at 60. If not, only the pixel index is increased at 60. At 62, the process checks to see if any pixels remain in the tile that have not been processed. If the pixel index is greater than the number of pixels in the tile, the process completes and the ratio of the number of coefficients/number of pixels becomes the subband score at 64. If not, the pixel continues by returning to 54. This score is then used as the subband score in the process of Figure 5.

In this manner, the process can determine automatically the blurriness of the image for a particular layer of resolution. This information can be used to select different types of encoding resident in the encoded data, or to change the layer of the resolution used to generate the final coded image.

Variations and modification exist. The process can be further optimized by evaluating only those tiles that correspond to foreground regions of the image. The embodiments above focused on the luma component of decoded YUV data, but it could also act on the chroma component.

Examples provide a method of detecting image quality in a wavelet transform-encoded image, comprising receiving wavelet transform-encoded image data partitioned into tiles at a decoder, each tile partitioned into a number of subbands, evaluating a number of wavelets in fewer than the number of subbands, assigning a measure to each of the subbands evaluated for each tile, using the measures to determine a perceptual visual quality score for the image, and adjusting operation of the decoder based upon the perceptual visual quality score.

Some examples further comprise assigning a weight to each tile, wherein the weight is based upon a relative importance of the tile in the image.

In some examples, processing each tile into a number of subbands comprises processing each tile into four subbands.

In some examples, evaluating the number of wavelets comprises evaluating the number of wavelets in three of the four subbands.

In some examples, assigning a measure to each of the subbands comprises comparing a number of coefficients to at least one threshold and assigning a measure based upon the comparison.

In some examples, evaluating the number of wavelets comprises evaluating the number of wavelets in a luminance component of the image data.

In some examples, evaluating the number of wavelets comprises evaluating the number of wavelets in both a luminance and a chroma component of the image data.

In some examples, partitioning the image data into tiles occurs in a resolution layer lower than a final resolution of a decoded image.

In some examples, partitioning the image data into tiles occurs in each of several resolution layers.

In some examples, evaluating the number of wavelets is performed only on those tiles that correspond to a foreground region of the image date.

Examples provide a decoding system, comprising a memory to receive wavelet-transformed compressed image data having a predetermined number of subbands, and a decoder to determine a number of wavelet coefficients in a subset of the predetermined number of subbands, measure an amount of blur in the image data based upon the number of wavelet coefficients, and adjust a decoding process based upon the amount of blur.

Another embodiment includes computer readable code embodied on a computer readable medium that, when executed, causes one or more processors (for example of a computer) to perform any of the above-described operations. As used here, a processor or computer is any device that can execute code. Microprocessors, programmable logic devices, multiprocessor systems, digital signal processors, personal computers, or the like are all examples of such a computer. In some embodiments, the computer readable medium can be a tangible computer readable medium that is configured to store the computer readable code in a non-transitory manner.

Examples mainly relate to the field of compressed image processing and more particularly to the measurement of visual quality of images, compressed using the JPEG2000 standard.

Image compression is well known in the art which is used to reduce irrelevance and redundancy of the image data in order to be able to store or transmit data in an efficient form. There are different types of image compression namely BMP (bitmap), PNG (portable Network Graphics), TIFF (Tagged Image File Format), JPEG (Joint Photographic Experts Group), and JPEG 2000 (Joint Photographic Experts Group 2000), etc. The most commonly used techniques are JPEG (Joint Photographic Experts Group), and JPEG 2000 (Joint Photographic Experts Group 2000).

The JPEG is a commonly used method of lossy compression for digital images, particularly for those images produced by digital photography. One of the characteristics that make the algorithm very flexible is that the compression rate can be adjusted. If one compresses a lot, more information will be lost, but the result image size will be smaller. With a smaller compression rate one can obtain a better quality, but the size of the resulting image will be bigger.

Presently, JPEG2000 is one of the widely used image compression standards. JPEG2000 (Joint Photographic Experts Group 2000) is a wavelet-based image compression standard. It was created by the Joint Photographic Experts Group committee with the intention of superseding their original discrete cosine transform based JPEG standard. JPEG 2000 has higher compression ratios than JPEG. It does not suffer from the uniform blocks, so characteristics of JPEG images with very high compression rates. Unlike its predecessor, namely the JPEG which is a discrete- cosine-transform (DCT) based standard, JPEG2000 employs wavelet transforms. While it achieves superior performance over JPEG, at high compression ratios JPEG2000 can introduce certain visual artifacts as part of the encoding process. These are primarily the ringing and blurring artifacts.

From a visual quality perspective, it therefore becomes important to quantify the amount of such artifacts introduced by the compression process. While methods for measuring blurriness in digital images are already proposed, some of them operate in the spatial domain. By detecting edges in an image, they propose to evaluate the local blur at such edges, and then arrive at a global blur estimate for the whole image. Such proposals would need a complete decode of the compressed data. The other methods that operate in the spectral domain, also introduce certain complexities like additional number of transform layers processed, and/or other overheads in the form of edge type analysis and edge sharpness analysis.

Though both these categories of methods achieve good results in terms of detecting and measuring blurriness, it may not be practical to use them in certain applications that impose a "low-latency" output constraint.

Therefore there is a need in the art with quicker way of estimating the perceived blurriness in compressed images to solve the above mentioned limitations.

The above and other aspects, features, and advantages of certain exemplary embodiments of the present invention will be more apparent from the following description taken in conjunction with the accompanying drawings in which:
Persons skilled in the art will appreciate that elements in the figures are illustrated for simplicity and clarity and may have not been drawn to scale. For example, the dimensions of some of the elements in the figure may be exaggerated relative to other elements to help to improve understanding of various exemplary embodiments of the present disclosure.

Throughout the drawings, it should be noted that like reference numbers are used to depict the same or similar elements, features, and structures.

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention.

It is to be understood that the singular forms "a," "an," and "the" include plural referents unless the context clearly dictates otherwise. The present invention proposes a quick and an efficient heuristic method for measuring the amount of perceived blurriness in a JPEG2000 compressed stream. It obviates the need for a full decode of the compressed image, and instead operates on the wavelet coefficients, prior to any transform. Blur in images is mostly caused by the excessive low pass filtering of data (thereby losing out the high frequency components, and consequently the "details" in the image). A non-blurred image on the other hand, will have enough "details" in the image intact, i.e. a significant presence of edges.

Figure 5 shows the Sub-band labeling after one level of wavelet transform according to one embodiment of the present invention.

The figure shows the sub-band labeling after one level of wavelet transform. The wavelet transform of the JPEG2000 standard decomposes the original image into a set of four sub-bands, each with half the original resolution, after one level of transform. The LL sub-band can then undergo further decomposition, based on the user configuration.

The labeling convention in Figure.5 is:
**LL:** Low pass filtering in both vertical and horizontal directions.
**HL:** High pass filtering in horizontal direction and low pass filtering in the vertical direction.
**LH:** Low pass filtering in horizontal direction and high pass filtering in the vertical direction.
**HH:** High pass filtering in both vertical and horizontal directions.

JPEG2000 standard partitions the image into "tiles". Tiles are analogous to the 8x8 blocks in the JPEG standard. They are rectangular, and all of them are of the same size. They are coded independently, and represent different regions of the input image.

In calculating the amount of blurriness in an image, the present invention evaluates the presence of wavelet coefficients in the HH, LH and HL sub-bands, only for the n - 1th resolution layer of each compressed tile.

Where, "n" corresponds to the resolution of the final decoded image.

It then assigns to the input image, a real value between 0 and 1 as the PVQ score.

Where,
- a value of 0 indicates poor quality images with high blur
- a value of 1 indicates a good quality image with very less perceived blur

A method followed by the present invention is listed below:
a. Process the n - 1th resolution layer, by setting current layer, N = n - 1
b. For each tile in the JPEG2000 compressed image,
   i. Evaluate the presence of wavelet coefficients in the HHN sub-band, and assign it to "HHScore".
   ii. Evaluate the presence of wavelet coefficients in the LHN sub-band, and assign it to "LHScore".
   iii. Evaluate the presence of wavelet coefficients in the HLN sub-band, and assign it to "HLScore".
c. Compute a final weighted "pvqScore" for the entire image, using "HHScore", "LHScore" and "HLScore" from the individual tiles.

By limiting the evaluation only to the n - 1th layer, the Information would be progressively "lost" due to the two-dimensional low pass filtering in the LL sub-band(s). Moreover, as the resolutions decreases, what remains is mostly the low frequency component of the original image. Looking for presence of high frequency data (or, in other words, for presence of edges) in such components, may only mislead the method. Further, in the lower resolutions, it will mostly be "synthetic" data, after successive transforms - and not the information as it exists in the original layer.

Since it estimates the blurriness using only one representative resolution and does not employ any transforms, the method can be computationally efficient to calculate the PVQ of a compressed JPEG2000 image. 75% of the final image area will be evaluated for PVQ score (corresponding to the three sub-bands). The method currently proposes PVQ evaluation only in the luminance component of the image.

It can be further optimized by evaluating for blur only in those tiles that correspond to the foreground region of the image (whenever such information about foreground/background tiles is available). This is relying on the assumption that blurriness is mostly perceived by the human visual system (HVS) in the foreground region of the image, and any blurriness in the background is generally not perceived as an artifact.

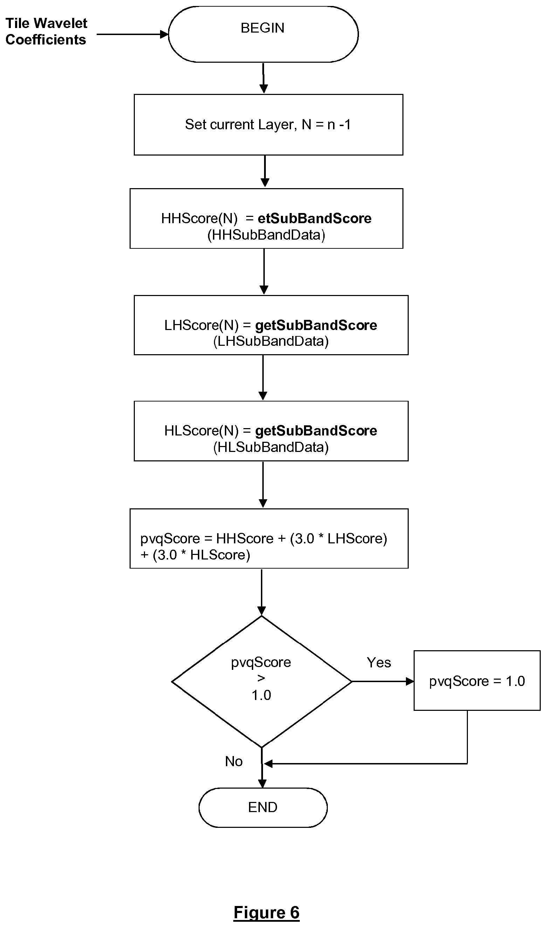

Figure 6 shows the flowchart of PVQ evaluation process according to one embodiment of the present invention.

The figure shows the flowchart of PVQ evaluation process. For the purpose of simplicity, it assumes only one tile per compressed image. The same process can be repeated over all the tiles that are selected for evaluating blur. In calculating the final weighted "pvqScore", a value of 3.0 was chosen as weights for the HL and LH sub-bands. This was an empirically derived value for one-tile configuration, and may be changed accordingly. In streams where multiple tiles are present, the PVQ scores from individual tiles could be assigned appropriate weights based on their relative importance in the image, to yield a final "pvqScore".

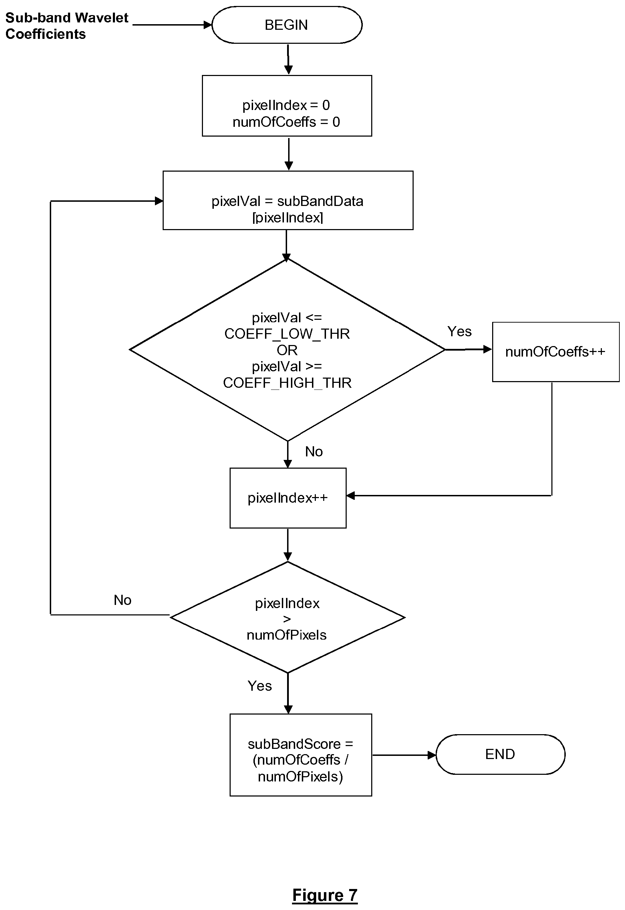

Figure 7 shows the flowchart of getSubBandScore () process according to one embodiment of the present invention.

The figure shows the flowchart describing the sub-process, "getSubBandScore ()". It is invoked by providing as input data, the respective sub- bands' wavelet coefficients, and getting as output, the sub-band score. COEFF_LOW_THR and COEFF_HIGH_THR are empirically derived coefficient detection thresholds, and are assigned the values of 123 and 133 respectively, for 8-bit depth input data. Based on image bit-depth, they can be modified accordingly.

## Claims

1. A method of detecting image quality in a wavelet transform-encoded image, comprising:
receiving wavelet transform-encoded image data (12) partitioned into tiles (20) at a decoder (14), each tile partitioned into four subbands;
evaluating a number of wavelets in three of the four subbands, wherein the wavelets in a subband filtered using low pass filtering in the horizontal and vertical directions are not evaluated;
assigning a measure to each of the subbands evaluated for each tile;
using the measures to determine a perceptual visual quality score for the image; and
adjusting operation of the decoder based upon the perceptual visual quality score,
wherein the perceptual visual quality score indicates an amount of blur in the image, a higher perceptual visual quality score indicating a lower amount of blur, and
wherein assigning a measure to each of the subbands comprises comparing, for each pixel in the subband being evaluated, a numerical value for the pixel to a low threshold and to a high threshold wherein the pixel value is set equal to the subband data for the pixel, incrementing a subband coefficient count if the numerical value of the pixel is less than the low threshold or higher than the high threshold, and assigning a measure for the evaluated subband based upon a ratio of the subband coefficient count and a number of pixels in the evaluated subband.

2. The method of claim 1, further comprising assigning a weight to each tile, wherein the weight is based upon a relative importance of the tile in the image.

3. The method of any preceding claim, wherein evaluating the number of wavelets comprises evaluating the number of wavelets in a luminance component of the image data.

4. The method of any preceding claim, wherein evaluating the number of wavelets comprises evaluating the number of wavelets in both a luminance and a chroma component of the image data.

5. The method of any preceding claim, wherein partitioning the image data into tiles occurs in a resolution layer lower than a final resolution of a decoded image.

6. The method of any preceding claim, wherein partitioning the image data into tiles occurs in each of several resolution layers.

7. The method of any preceding claim, wherein evaluating the number of wavelets is performed only on those tiles that correspond to a foreground region of the image date.

8. A computer readable medium containing program code instructions which, when executed by one or more processors, cause the one or more processors to perform any of the methods according to claims 1 to 7.

9. A decoding system (19), comprising:
a memory to receive wavelet-transformed compressed image data (12) being partitioned into tiles (20), each tile partitioned into four subbands; and
a decoder to:
evaluate a number of wavelets in three of the four subbands, wherein the wavelets in a subband filtered using low pass filtering in the horizontal and vertical directions are not evaluated;
assign a measure to each of the subbands evaluated for each tile;
use the measures to determine a perceptual visual quality score for the image; and
adjust operation of the decoder based upon the perceptual visual quality score,
wherein the perceptual visual quality score indicates an amount of blur in the image, a higher perceptual visual quality score indicating a lower amount of blur, and
wherein assigning a measure to each of the subbands comprises comparing, for each pixel in the subband being evaluated, a numerical value for the pixel to a low threshold value and to a high threshold value wherein the pixel value is set equal to the subband data for the pixel, incrementing a subband coefficient count if the numerical value of the pixel is less than the low threshold or higher than the high threshold, and assigning a measure for the evaluated subband based upon a ratio of the subband coefficient count and a number of pixels in the evaluated subband.

10. The decoding system of claim 9, wherein evaluating the number of wavelets comprises evaluating the number of wavelets in a luminance component of the image data.

11. The decoding system of claim 9 or 10, wherein evaluating the number of wavelets comprises evaluating the number of wavelet coefficients in both a luminance and chroma component of the image data.

## Patentansprüche

1. Verfahren zum Detektieren von Bildqualität in einem Wavelet-Transformations-codierten Bild, umfassend:
Empfangen von Wavelet-Transformations-codierten Bilddaten (12), die in Kacheln (20) unterteilt sind, an einem Decodierer (14), wobei jede Kachel in vier Teilbänder unterteilt ist;
Evaluieren einer Anzahl an Wavelets in drei der vier Teilbänder, wobei die Wavelets in einem Teilband, das unter Verwendung von Tiefpassfilterung in der horizontalen und vertikalen Richtung gefiltert wird, nicht evaluiert werden;
Zuweisen eines Maßes zu jedem der Teilbänder, die für jede Kachel evaluiert werden;
Verwenden der Maße, um eine Bewertung der visuellen Wahrnehmungsqualität für das Bild zu bestimmen; und
Anpassen von Betrieb des Decoders basierend auf der Bewertung der visuellen Wahrnehmungsqualität,
wobei die Bewertung der visuellen Wahrnehmungsqualität eine Menge an Unschärfe in dem Bild angibt, wobei eine höhere Bewertung der visuellen Wahrnehmungsqualität eine geringere Menge an Unschärfe angibt, und
wobei das Zuweisen eines Maßes zu jedem der Teilbänder Vergleichen, für jedes Pixel in dem evaluierten Teilband, eines numerischen Wertes für das Pixel mit einem niedrigen Schwellenwert und mit einem hohen Schwellenwert, wobei der Pixelwert gleich den Teilbanddaten für das Pixel gesetzt ist, Inkrementieren einer Teilbandkoeffizientenzahl, falls der numerische Wert des Pixels kleiner als der niedrige Schwellenwert oder höher als der hohe Schwellenwert ist, und Zuweisen eines Maßes für das evaluierte Teilband basierend auf einem Verhältnis der Teilbandkoeffizientenzahl und einer Anzahl an Pixeln in dem evaluierten Teilband umfasst.

2. Verfahren nach Anspruch 1, ferner umfassend Zuweisen eines Gewichts zu jeder Kachel, wobei das Gewicht auf einer relativen Bedeutung der Kachel in dem Bild basiert.

3. Verfahren nach einem vorhergehenden Anspruch, wobei das Evaluieren der Anzahl an Wavelets Evaluieren der Anzahl an Wavelets in einer Luminanzkomponente der Bilddaten umfasst.

4. Verfahren nach einem vorhergehenden Anspruch, wobei das Evaluieren der Anzahl an Wavelets Evaluieren der Anzahl an Wavelets sowohl in einer Luminanz- als auch einer Chromakomponente der Bilddaten umfasst.

5. Verfahren nach einem vorhergehenden Anspruch, wobei das Unterteilen der Bilddaten in Kacheln in einer Auflösungsschicht auftritt, die niedriger als eine finale Auflösung eines decodierten Bildes ist.

6. Verfahren nach einem vorhergehenden Anspruch, wobei das Unterteilen der Bilddaten in Kacheln in jeder von mehreren Auflösungsschichten erfolgt.

7. Verfahren nach einem vorhergehenden Anspruch, wobei das Evaluieren der Anzahl an Wavelets nur an denjenigen Kacheln durchgeführt wird, die einer Vordergrundregion der Bilddaten entsprechen.

8. Computerlesbares Medium, das Programmcodeanweisungen enthält, die, wenn durch einen oder mehrere Prozessoren ausgeführt, den einen oder die mehreren Prozessoren veranlassen, ein beliebiges der Verfahren nach Anspruch 1 bis 7 durchzuführen.

9. Decodiersystem (19), umfassend:
einen Speicher, um Wavelet-transformierte komprimierte Bilddaten (12) zu empfangen, die in Kacheln (20) unterteilt sind, wobei jede Kachel in vier Teilbänder unterteilt ist; und
einen Decoder zu Folgendem:
Evaluieren einer Anzahl an Wavelets in drei der vier Teilbänder, wobei die Wavelets in einem Teilband, das unter Verwendung von Tiefpassfilterung in der horizontalen und vertikalen Richtung gefiltert wird, nicht evaluiert werden;
Zuweisen eines Maßes zu jedem der Teilbänder, die für jede Kachel evaluiert werden;
Verwenden der Maße, um eine Bewertung der visuellen Wahrnehmungsqualität für das Bild zu bestimmen; und
Anpassen von Betrieb des Decoders basierend auf der Bewertung der visuellen Wahrnehmungsqualität,
wobei die Bewertung der visuellen Wahrnehmungsqualität eine Menge an Unschärfe in dem Bild angibt, wobei eine höhere Bewertung der visuellen Wahrnehmungsqualität eine geringere Menge an Unschärfe angibt, und
wobei das Zuweisen eines Maßes zu jedem der Teilbänder Vergleichen, für jedes Pixel in dem evaluierten Teilband, eines numerischen Wertes für das Pixel mit einem niedrigen Schwellenwert und mit einem hohen Schwellenwert, wobei der Pixelwert gleich den Teilbanddaten für das Pixel gesetzt ist, Inkrementieren einer Teilbandkoeffizientenzahl, falls der numerische Wert des Pixels kleiner als der niedrige Schwellenwert oder höher als der hohe Schwellenwert ist, und Zuweisen eines Maßes für das evaluierte Teilband basierend auf einem Verhältnis der Teilbandkoeffizientenzahl und einer Anzahl an Pixeln in dem evaluierten Teilband umfasst.

10. Decodiersystem nach Anspruch 9, wobei das Evaluieren der Anzahl an Wavelets Evaluieren der Anzahl an Wavelets in einer Luminanzkomponente der Bilddaten umfasst.

11. Decodiersystem nach Anspruch 9 oder 10, wobei das Evaluieren der Anzahl an Wavelets Evaluieren der Anzahl an Wavelet-Koeffizienten sowohl in einer Luminanz- als auch einer Chromakomponente der Bilddaten umfasst.

## Revendications

1. Procédé de détection de qualité d'image dans une image codée par transformée en ondelettes, comprenant :
la réception de données d'image codées par transformée en ondelettes (12) partitionnées en tuiles (20) au niveau d'un décodeur (14), chaque tuile étant partitionnée en quatre sous-bandes ;
l'évaluation d'un nombre d'ondelettes dans trois des quatre sous-bandes, dans lequel les ondelettes dans une sous-bande filtrée à l'aide d'un filtrage passe-bas dans les directions horizontale et verticale ne sont pas évaluées ;
l'attribution d'une mesure à chacune des sous-bandes évaluées pour chaque tuile ;
l'utilisation des mesures pour déterminer un score de qualité visuelle de perception pour l'image ; et
le réglage d'un fonctionnement du décodeur sur la base du score de qualité visuelle de perception,
dans lequel le score de qualité visuelle de perception indique une quantité de flou dans l'image, un score de qualité visuelle de perception plus élevé indiquant une quantité de flou plus basse, et
dans lequel l'attribution d'une mesure à chacune des sous-bandes comprend la comparaison, pour chaque pixel de la sous-bande en cours d'évaluation, d'une valeur numérique pour le pixel à un seuil bas et à un seuil haut dans lequel la valeur de pixel est réglée égale aux données de sous-bande pour le pixel, l'incrémentation d'un compte de coefficient de sous-bande si la valeur numérique du pixel est inférieure au seuil bas ou supérieure au seuil haut, et l'attribution d'une mesure pour la sous-bande évaluée sur la base d'un rapport du compte de coefficient de sous-bande et d'un nombre de pixels dans la sous-bande évaluée.

2. Procédé de la revendication 1, comprenant en outre l'attribution d'un poids à chaque tuile, dans lequel le poids est basé sur une importance relative de la tuile dans l'image.

3. Procédé d'une quelconque revendication précédente, dans lequel l'évaluation du nombre d'ondelettes comprend l'évaluation du nombre d'ondelettes dans une composante de luminance des données d'image.

4. Procédé d'une quelconque revendication précédente, dans lequel l'évaluation du nombre d'ondelettes comprend l'évaluation du nombre d'ondelettes à la fois dans une composante de luminance et de chrominance des données d'image.

5. Procédé d'une quelconque revendication précédente, dans lequel le partitionnement des données d'image en tuiles se produit dans une couche de résolution plus basse qu'une résolution finale d'une image décodée.

6. Procédé d'une quelconque revendication précédente, dans lequel le partitionnement des données d'image en tuiles se produit dans chacune de plusieurs couches de résolution.

7. Procédé d'une quelconque revendication précédente, dans lequel l'évaluation du nombre d'ondelettes est réalisée uniquement sur les tuiles qui correspondent à une région de premier plan des données d'image.

8. Support lisible par ordinateur contenant des instructions de code de programme qui, lorsqu'elles sont exécutées par un ou plusieurs processeurs, amènent les un ou plusieurs processeurs à réaliser l'un quelconque des procédés selon les revendications 1 à 7.

9. Système de décodage (19), comprenant :
une mémoire pour recevoir des données d'image compressées par transformée en ondelettes (12) partitionnées en tuiles (20), chaque tuile étant partitionnée en quatre sous-bandes ; et
un décodeur pour :
évaluer un nombre d'ondelettes dans trois des quatre sous-bandes, dans lequel les ondelettes dans une sous-bande filtrée à l'aide d'un filtrage passe-bas dans les directions horizontale et verticale ne sont pas évaluées ;
attribuer une mesure à chacune des sous-bandes évaluées pour chaque tuile ;
utiliser les mesures pour déterminer un score de qualité visuelle de perception pour l'image ; et
régler un fonctionnement du décodeur sur la base du score de qualité visuelle de perception,
dans lequel le score de qualité visuelle de perception indique une quantité de flou dans l'image, un score de qualité visuelle de perception plus élevé indiquant une quantité de flou plus basse, et
dans lequel l'attribution d'une mesure à chacune des sous-bandes comprend la comparaison, pour chaque pixel de la sous-bande évaluée, d'une valeur numérique pour le pixel à une valeur de seuil bas et à une valeur de seuil haut dans lequel la valeur de pixel est réglée égale aux données de sous-bande pour le pixel, l'incrémentation d'un compte de coefficient de sous-bande si la valeur numérique du pixel est inférieure au seuil bas ou supérieure au seuil haut, et l'attribution d'une mesure pour la sous-bande évaluée sur la base d'un rapport du compte de coefficient de sous-bande et d'un nombre de pixels dans la sous-bande évaluée.

10. Système de décodage de la revendication 9, dans lequel l'évaluation du nombre d'ondelettes comprend l'évaluation du nombre d'ondelettes dans une composante de luminance des données d'image.

11. Système de décodage de la revendication 9 ou 10, dans lequel l'évaluation du nombre d'ondelettes comprend l'évaluation du nombre de coefficients d'ondelettes à la fois dans une composante de luminance et de chrominance des données d'image.
